(19)

Europäisches
Patentamt
European
Patent Office
Office européen
des brevets

(11) **EP 2 474 885 A1**

(12) **EUROPEAN PATENT APPLICATION**
published in accordance with Art. 153(4) EPC

(43) Date of publication:
**11.07.2012 Bulletin 2012/28**

(21) Application number: **10813616.9**

(22) Date of filing: **16.08.2010**

(51) Int Cl.:
*G06F 3/041* (2006.01)    *G06F 3/044* (2006.01)
*G06F 3/048* (2006.01)

(86) International application number:
**PCT/JP2010/063820**

(87) International publication number:
**WO 2011/027665 (10.03.2011 Gazette 2011/10)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **02.09.2009   JP 2009202513**

(71) Applicant: **NEC Corporation
Tokyo 108-8001 (JP)**

(72) Inventor: **HASUI, Ryoji
Tokyo 108-8001 (JP)**

(74) Representative: **Reeve, Nicholas Edward
Reddie & Grose LLP
Theobalds Road
London WC1X 8PL (GB)**

(54) **DISPLAY DEVICE**

(57)    Information is displayed on display (110) included in display device (100) having a capacitive touch panel function. Sensor (120) measures a variation in capacitance on display (110), and outputs the measured variation in capacitance and position information indicating the position at which the capacitance varies. Controller (130) determines whether or not a finger is in proximity to display (110) on the basis of the variation in capacitance output from sensor (120). If it is determined that the finger is in proximity to display (110), coordinates on display (110) are fixed according to the position indicated by the position information. A screen displayed on display (110) is enlargingly displayed on display (110) centered on the fixed coordinates at a prescribed magnification, and the coordinates are secured until it is determined that the finger is not in proximity to display (110).

Fig. 1

**Description**

Technical Field

The present invention relates to a display device for displaying information, a display method and a program.

Background Art

In recent years, display devices, such as information terminals including touch panel functions, have become widespread. Display devices mounted with a capacitive touch panel element, among touch panel functions, have also been on the market.

In the display devices including the capacitive touch panel element, a desired region is selected from a screen displayed on a display through the use of a finger. Accordingly, in some cases where the region is small (narrow), it may be difficult to correctly select the desired region compared to selecting the desired region on a display device that is mounted having a resistive touch panel element at which a selection is made by using a stylus pen.

Such a problem noticeably appears in a mobile terminal in which a display is combined with a capacitive touch panel element. Since the size of the display in a mobile terminal is small, a display size that is large (wide) enough to be easily manipulated by a user's fingers, as a region for UI(User Interface) components (buttons, links, etc.) where interaction occurs, often cannot realized. This is likely to cause an operating error, when the device is operated, such as pressing a button or a link other than the desired button or link.

In particular, in order to display as much information as possible on the small display of a browser screen, the overall size of the characters that are displayed on a browser screen need to be reduced. In this case, there is a problem in that it is difficult to select a link by a finger tap.

In a case where a software keyboard is displayed on the display of a mobile terminal and operation is performed thereon, since the number of buttons to be displayed is very large, the individual buttons are displayed small. This causes a problem in that a button other than an intended button is likely to be erroneously pressed.

In order to solve the aforementioned problem, there is a method that enlarges information on a display and displays a button, a link and the like in a large size so as to facilitate selection. However, the method of enlarging information on a display has the following problem.

In the case where information is displayed in a large size on the display, the amount of information that can be displayed on the screen decreases. This frequently causes the screen to be scrolled. For instance, in a case of operating a browser or a mailer, an enlarged display increases the sizes of a link and the like, thereby making it easy to make a selection using a finger. This however reduces the amount of information displayable on one screen. Accordingly, it is difficult to see the entire image (layout) of a page, and a scrolling operation is frequently required. This in turn causes a problem that reduces usability.

Thus, a technique has been conceived in which, when it is detected that an object, such as a finger, comes into proximity with a display, a part of a partial region that is in proximity (e.g. see Patent Literature 1) is enlarged.

Citation List

Patent Literature

Patent Literature 1: JP2008-009759A

Summary of Invention

Technical Problem

In the technique as described in Patent Literature 1, a display screen is preliminarily divided into partial regions, and, when a finger or the like comes into proximity to a region to be operated, display of a partial region including the position of the detected finger or the like is enlarged. Accordingly, the position at which the finger or the like comes into proximity with the screen to enlargingly display the screen differs from the position at which the finger or the like at which a region where an operation is to be performed is touched after the display has been enlarged. This causes a problem that requires the position of the finger or the like to be changed on all such occasions.

An object of the present invention is to provide a display device, a display method and a program that solve the aforementioned problems.

Solution to Problem

A display device of the present invention is a display device having a capacitive touch panel function, the display device including:

a display that displays information;
a sensor that measures a variation in capacitance on said display, and outputs the measured variation in capacitance and position information indicating a position at which the capacitance varies; and
a controller that determines whether or not a finger is in proximity to said display on the basis of the variation in capacitance output from said sensor, and, if a determination is made that the finger is in proximity to said display, fixes coordinates on said display according to the position indicated by the position information, enlargingly displays on said display a screen having been already displayed on said display, in a manner centered on the fixed coordinates at a prescribed magnification, and secures the coordinates until a determination is made that the finger is not in proximity to said display.

A display method of the present invention is a display method of displaying information on a display screen included in a display device having a capacitive touch panel function, the method including processes of:

   measuring a variation in capacitance on the display;
   determining whether or not a finger is in proximity to the display on the basis of the measured variation in capacitance;
   fixing coordinates on the display according to a position at which the capacitance varies;
   enlargingly displaying on the display a screen having been already displayed on the display in a manner centered on the fixed coordinates at a prescribed magnification; and
   securing the coordinates until a determination is made that the finger is not in proximity to the display.

A program of the present invention is a program causing a display device having a capacitive touch panel function to execute steps of:

   displaying information on a display included in the display device;
   measuring a variation in capacitance on the display;
   determining whether or not a finger is in proximity to the display on the basis of the measured variation in capacitance;
   fixing coordinates on the display according to a position at which the capacitance varies;
   enlargingly displaying on the display a screen having been already displayed on the display in a manner centered on the fixed coordinates at a prescribed magnification; and
   securing the coordinates until a determination is made that the finger is not in proximity to the display.

Advantageous Effects of Invention

As described above, the present invention can easily prevent an erroneous input that is performed using a touch panel, without degrading usability.

Brief Description of Drawings

   [Figure 1] Figure 1 is an exemplary embodiment of a display device.
   [Figure 2] Figure 2 is a flowchart for illustrating a display method in the display device shown in Figure 1.
   [Figure 3] Figure 3 is a diagram showing an example of a screen displayed in step 1 on a display shown in Figure 1.
   [Figure 4] Figure 4 is a diagram showing a manner where a finger is in proximity to the screen displayed on the display shown in Figure 1 and central coordinates are fixed by a process in step 4.
   [Figure 5] Figure 5 is a diagram showing a manner where a region enclosed by a broken line shown in Figure 4 is enlargingly displayed by a process in step 5.
   [Figure 6] Figure 6 is a diagram showing an example of an enlarged display region, which is enlarged on the display, and a non-enlarged display region, which is not enlarged.

Description of Embodiments

An exemplary embodiment will hereinafter be described with reference to the drawings.

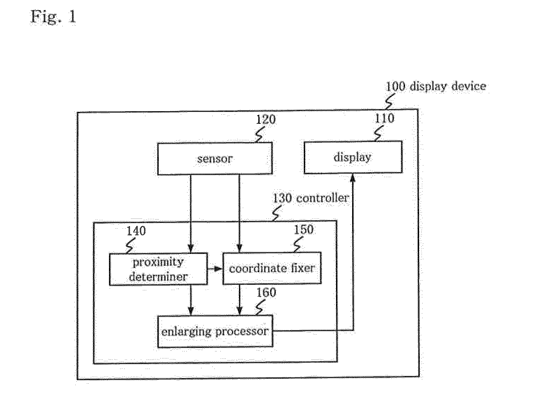

Figure 1 is a diagram showing an exemplary embodiment of a display device of the present invention.

As shown in Figure 1, display device 100 in this exemplary embodiment is a device that has a capacitive touch panel function and includes display 110, sensor 120, and controller 130 for controlling these elements. Note that Figure 1 only shows configurational elements pertaining to the present invention among the configurational elements of display device 100 of the present invention.

Display 110 is a display that displays information according to an instruction from controller 130. As display 110, for instance, an LCD (Liquid Crystal Display) can be exemplified.

Sensor 120 is a capacitive touch panel element, and measures a variation in capacitance on display 110. Sensor 120 outputs the measured variation in capacitance to controller 130. Sensor 120 outputs, to controller 130, a position where the capacitance has been changed, that is, position information indicating the position of a finger. When an input operation by the finger is performed through use of display 110, sensor 120 notifies controller 130 of the input operation.

As shown in Figure 1, controller 130 includes proximity determiner 140, coordinate fixer 150 and enlarging processor 160.

Proximity determiner 140 determines whether or not the finger comes into proximity to display 110 and whether or not the finger contacts display 110 on the basis of the variation in capacitance output from sensor 120. At this time, if the variation in capacitance output from sensor 120 is a value not less than a preset first threshold and less than a preset second threshold, proximity determiner 140 determines that the finger comes into proximity to display 110. If the variation in capacitance output from sensor 120 is a value not less than the second threshold, proximity determiner 140 determines that the finger contacts display 110.

Coordinate fixer 150 fixes a position on display 110 according to the position indicated by the position information output from sensor 120. At this time, coordinate fixer 150 fixes a position at which the position indicated by the position information output from sensor 120 is projected onto display 110, as coordinates. Coordinate fixer 150 secures the fixed coordinates until proximity determiner 140 determines that the finger is not in proximity to display 110.

If proximity determiner 140 determines that the finger is in proximity to display 110, enlarging processor 160 enlargingly displays, on display 110, a screen having been already displayed on display 110 at a prescribed magnification centered on the coordinates fixed by coordinate fixer 150. Enlarging processor 160 enlargingly displays, on display 110, a prescribed range centered on the coordinates fixed by coordinate fixer 150 in the screen having been already displayed on display 110.

Controller 130 displays screens according to respective processes for executing an application on display 110. Controller 130 executes a prescribed process in the application according to an input operation in a case where proximity determiner 140 determines that the finger contacts display 110. For instance, processing of an event is performed on the basis of an input operation of a touch panel event (single-tap event, double-tap event, etc.) and coordinates on display 110, at which the event occurs, and screen information that is to be displayed on display 110, are updated. Types of applications to be executed include various types, such as a browser and a mailer. However, the type of application is not directly related to the present invention. Accordingly, description of the detailed configuration thereof is omitted here.

A display method in this exemplary embodiment will hereinafter be described.

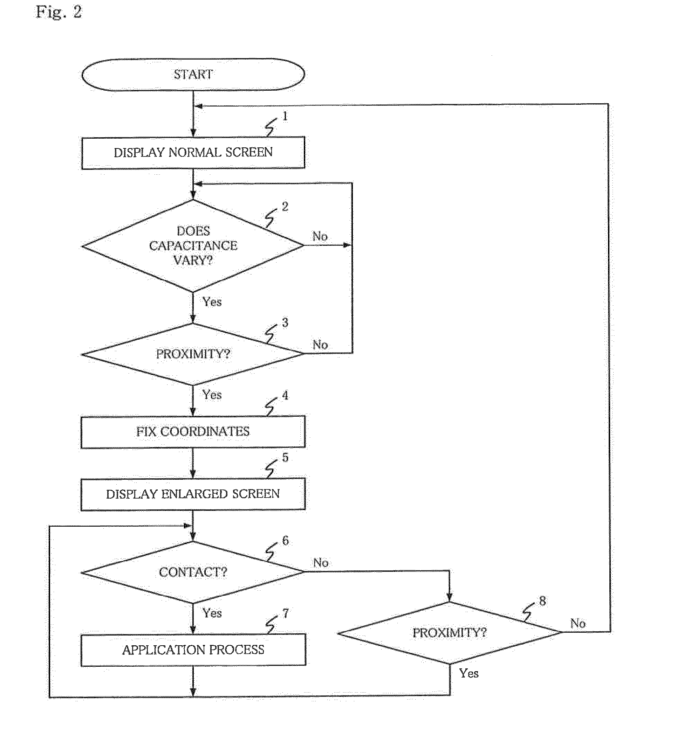

Figure 2 is a flowchart for illustrating a display method in display device 100 in Figure 1.

When a prescribed application is activated in display device 100, a normal screen is displayed on display 110 in step 1 according to the activated application. Here, the normal screen is a screen displayed without enlargement.

Subsequently, in step 2, a capacitance on display 110 is measured by sensor 120.

If the capacitance measured by sensor 120 varies, the variation is output from sensor 120 to proximity determiner 140. Further, position information indicating that the position has varied is output from sensor 120 to coordinate fixer 150.

Then, it is determined whether or not the finger comes into proximity to display 110 in step 3 by proximity determiner 140 on the basis of variation in capacitance output from sensor 120. More specifically, if the variation in capacitance output from sensor 120 is a value not less than the preset first threshold and less than the preset second threshold, it is determined that the finger comes into proximity to display 110.

If it is not determined that the finger comes into proximity to display 110, a process in step 2 is performed.

If it is determined that the finger comes into proximity to display 110, the coordinates on display 110 according to the position indicated by the position information output from sensor 120 is fixed by coordinate fixer 150 in step 4. At this time, the position at which the position indicated by the position information output from sensor 120 is projected onto display 110 is fixed as the coordinates by coordinate fixer 150. The fixed coordinates are secured by coordinate fixer 150 until it is determined by proximity determiner 140 that the finger is not in proximity to display 110. Note that the position information output from sensor 120 may be fixed as the coordinates as is.

Then, determiner 140 notifies enlarging processor 160 that the finger comes into proximity to display 110. Further, the fixed coordinates are notified from coordinate fixer 150 to enlarging processor 160.

Then, in step 5, a process of enlargingly displaying on display 110 the screen having been already displayed on display 110 that is centered on the coordinates fixed by coordinate fixer 150 at the preset magnification is performed by enlarging processor 160. Note that, the process of enlargingly displaying a preset range centered on the coordinates fixed by coordinate fixer 150 among ranges of the screen displayed on display 110 may be performed by enlarging processor 160.

Here, the screens displayed on display 110 in the respective processes will be described.

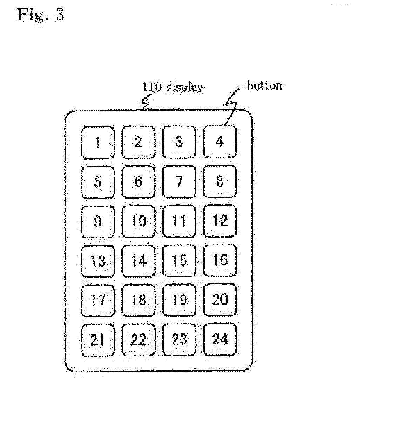

Figure 3 is a diagram showing an example of the screen displayed on display 110 shown in Figure 1 in step 1.

As shown in Figure 3, buttons 1 to 24 are displayed on display 110. These are displayed on display 110 by executing an application.

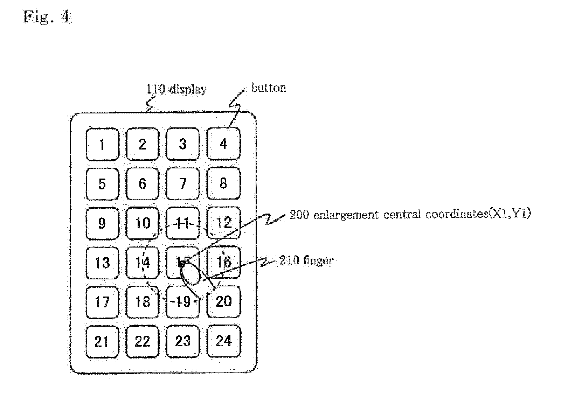

Figure 4 is a diagram showing a manner in which the finger is in proximity to the screen displayed on display 110 shown in Figure 1 and in which the central coordinates are fixed by the process in step 4.

As shown in Figure 4, when finger 210 comes into proximity to button 15 displayed on display 110, enlargement central coordinates (X1, Y1) 200 in order to be the center of enlargement are fixed by coordinate fixer 150 according to the position of finger 210. The preset range described in step 5 is indicated by enclosing the range with the broken line. The range enclosed with the broken line is enlargingly displayed.

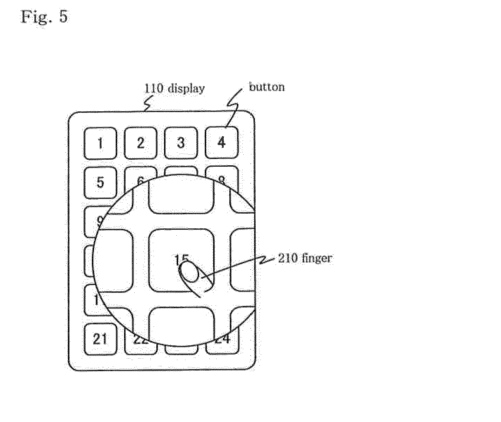

Figure 5 is a diagram showing a manner in which the region enclosed by the broken line shown in Figure 4 is enlargingly displayed by the process in step 5.

As shown in Figure 5, after finger 210 comes into proximity to display 110 and enlargement central coordinates (X1, Y1) 200 are fixed, the range enclosed with the broken line centered on enlargement central coordinates (X1, Y1) 200 shown in Figure 4 is enlargingly displayed. This facilitates selection of button 15.

Note that, as shown in Figures 4 and 5, the range may enlargingly be displayed centered on enlargement central coordinates (X1, Y1) 200 in a circular manner, or may enlargingly be displayed in a rectangular manner; the shape of the enlarged range is not specifically defined.

After the process in step 5, when the capacitance varies, it is determined whether or not the finger comes into contact with display 110 on the basis of the variation in step 6 by proximity determiner 140. More specifically, if the variation in capacitance output from sensor 120 is a value not less than the preset second threshold, it is determined that the finger comes into contact with display 110.

If it is determined that the finger comes into contact with display 110 by proximity determiner 140, the process by the executing application is performed in step 7 using a touch panel function. For instance, event processing is performed on the basis of an input operation of a touch panel event (single-tap event, double tap event, etc.) and the coordinates on display 110 at which the event occurs, and the screen information to be displayed on display 110, are updated.

For screen information notified to controller 130 by the application, an image for enlarged display is generated by enlarging processor 160. The process of displaying a screen on display 110 may be analogous to a process in a state of proximity. That is, a displayed screen at this time may be a screen in which an enlarged display centered on the coordinates fixed in step 4 is maintained.

If the enlarged display is maintained in the process of the application in step 7, it is determined whether the position (coordinates) notified from sensor 120 is included in the enlarged display region in the image of the enlarged display or whether it is included in the non-enlarged display region on the basis of the input operation using the touch panel function.

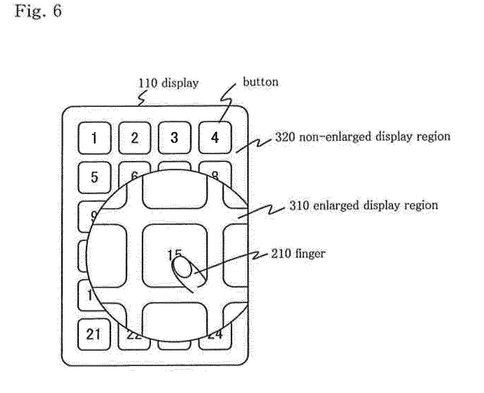

Figure 6 is a diagram showing an example of the enlarged display region that is enlarged on display 110 and the non-enlarged display region that is not enlarged.

When the coordinates in the enlarged display region 310 are notified from sensor 120, coordinate transformation is performed by controller 130 in conformity to the coordinates of the originally displayed image before the display has been enlarged, and the transformed coordinates are notified as touch panel coordinates to the application.

On the other hand, if coordinates in non-enlarged display region 320 are notified from sensor 120, the coordinate transformation is not performed and the coordinates are notified, as is, as touch panel coordinates to the application.

In controller 130, when a user using display device 100 performs a prescribed input operation (gesture operation) on the touch panel element, that is, for instance, when the user performs an operation of tapping the touch panel element with a finger once (single-tap event operation), an operation of tapping the panel with the finger twice at a short interval (double-tap operation) or the like, it is determined by controller 130 which gesture operation is performed, and the touch panel event (the single-tap event, the double tap event, etc.) is notified to the application.

A process of changing the focus display of UI is performed by executing the application according to the coordinate information notified from controller 130. When the touch panel event is notified, a process of selecting an item and the like is performed in combination with the notified coordinate information, and screen information in which a processing result is reflected is generated and transferred to controller 130. The operation of the application is analogous to details of the process realized in a typical application. Accordingly, detailed description thereof is omitted.

On the other hand, if it is not determined that a finger is in contact with display 110 by proximity determiner 140 in step 6, it is determined in step 8 by proximity determiner 140 whether or not the finger is in proximity to display 110 on the basis of the variation.

If it is determined by proximity determiner 140 that the finger is in proximity to display 110, the process in step 6 is performed.

If it is determined in step 8 by proximity determiner 140 that it is not in a state where a finger comes into proximity to display 110, the process in step 1 is performed. At this time, the coordinates fixed by coordinate fixer 150 are released.

Here, a specific example of the process of determining "proximity" and "contact" by proximity determiner 140 is described. Provided that the aforementioned first threshold is defined as Z1, the second threshold is defined as Z2 and the maximum value of the variation in capacitance notified from sensor 120 is defined as Zmax,

$$0 < Z1 < Z2 < Zmax.$$

Further, the variation in capacitance notified from sensor 120 is defined as Z.

In a case where variation in capacitance Z notified from sensor 120 is

$$Z < Z1,$$

it is determined that the finger is far apart from display 110. Accordingly, proximity determiner 140 determines that it is in a "state of non-proximity". In the process in step 3 described with reference to the flowchart shown in Figure 2, it is determined as "No". In the process in step 8 described with reference to the flowchart shown in Figure 2, it is determined as "No".

In a case where variation in capacitance Z notified from sensor 120 is

$$Z1 \leq Z < Z2,$$

it is determined that the finger is in proximity to display 110. Accordingly, proximity determiner 140 determines that it is in the "state of proximity". In the process in step 3 described with reference to the flowchart shown in Figure 2, it is determined as "Yes". Further, in the process in step 8 described with reference to the flowchart shown in Figure 2, it is determined as "Yes".

In a case where variation in capacitance Z notified from sensor 120 is

$$Z \geq Z2,$$

it is determined that the finger is in contact with display 110. Accordingly, proximity determiner 140 determines that it is in the "contact state". In the process in step 6 described with reference to the flowchart shown in Figure 2, it is determined as "Yes".

As described above, when the finger of the user comes into proximity to the touch sensor, the displayed image is enlarged. Accordingly, the region at and around the selection item with which the finger is in proximity is enlarged. This allows an error of the selection operation by the user to be reduced.

Further, when the finger of the user comes into proximity to the touch sensor and thus the displayed image is enlargingly displayed, the center point of the enlarged display does not deviate until the finger is apart from the touch sensor (becomes non-proximity). This can reduce an error of the selection operation when the user moves the finger used for making a selection (touching) after the display has been enlarged.

Note that the processes executed by the configurational elements provided in display device 100 described above may be executed by logic circuits fabricated according to respective purposes. Instead, programs specifying processing details may be recorded in a recording medium readable by display device 100, the program recorded in the recording medium may be read by display device 100 and executed. The recording medium readable by display device 100 indicates not only a removable recording medium, such as a floppy (registered trademark) disk, magneto-optical disk, DVD or CD, but also a memory, such as ROM or RAM, or HDD that is built in display device 100. The program recorded in the recording medium is read by controller 130 in display device 100, a process analogous to the aforementioned process is executed under control by a CPU. Here, the CPU functions as a computer that executes the program read from the recording medium recorded with the program.

The invention of this application has been described with reference to the exemplary embodiment. However, the invention of this application is not limited to the exemplary embodiment. Various modifications understandable by those skilled in the art can be made to the configuration and details of the invention of this application within the scope of the invention of this application.

This application claims the priority of Japanese Patent Application No. 2009-202513, filed September 2, 2009, the disclosure of which is incorporated herein by reference in its entirety.

**Claims**

1. A display device having a capacitive touch panel function, the display device comprising:

   a display that displays information;
   a sensor that measures a variation in capacitance on said display, and outputs the measured variation in capacitance and position information indicating a position at which the capacitance varies; and
   a controller that determines whether or not a finger is in proximity to said display on the basis of the variation in capacitance output from said sensor, and, if a determination is made that the finger is in proximity to said display, fixes coordinates on said display according to the position indicated by the position information, enlargingly displays on said display a screen having been already displayed on said display, in a manner centered on the fixed coordinates at a prescribed magnification, and secures the coordinates until a determination is made that the finger is not in proximity to said display.

2. The display device according to Claim 1, wherein said controller includes:

   a proximity determiner that determines whether or not the finger is in proximity to said display on the basis of the variation in capacitance output from said sensor;
   a coordinate fixer that, if said proximity determiner determines that the finger is in proximity to said display, fixes the coordinates on said display according to the position indicated by the position information, and secures the coordinates until said proximity determiner determines that the finger is not in proximity to said display; and
   an enlarging processor that, if said proximity determiner determines that the finger is in proximity to said display, enlargingly displays on said display the screen having been already displayed on said display, in a manner centered on the coordinates fixed by said coordinate fixer at a prescribed magnification.

**3.** The display device according to Claim 2, wherein, if the variation in capacitance measured by said sensor is a value not less than a preset first threshold and less than a preset second threshold, said proximity determiner determines that the finger is in proximity to said display, and, if the variation in capacitance measured by said sensor is a value not less than the second threshold, said proximity determiner determines that the finger is in contact with said display.

**4.** The display device according to Claim 2, wherein said enlarging processor enlargingly displays on said display a prescribed range centered on the coordinates fixed by said coordinate fixer, the range having been included in the screen displayed on said display.

**5.** The display device according to Claim 2, wherein said coordinate fixer fixes a position where the position indicated by the position information is projected onto said display, as the coordinates.

**6.** A display method of displaying information on a display screen included in a display device having a capacitive touch panel function, the method comprising processes of:

measuring a variation in capacitance on said display;
determining whether or not a finger is in proximity to said display on the basis of the measured variation in capacitance;
fixing coordinates on said display according to a position at which the capacitance varies;
enlargingly displaying on said display a screen having been already displayed on said display in a manner centered on the fixed coordinates at a prescribed magnification; and
securing the coordinates until a determination is made that the finger is not in proximity to said display.

**7.** The display method according to Claim 6, the method further comprising processes of:

determining that the finger is in proximity to said display, if the measured variation in capacitance is a value not less than a preset first threshold and less than a preset second threshold; and
determining that the finger is in contact with said display, if the measured variation in capacitance is a value not less than the second threshold.

**8.** The display method according to Claim 6, the method further comprising a process of enlargingly displaying on said display a prescribed range centered on the fixed coordinates, the range having been included in the screen displayed on said display.

**9.** The display method according to Claim 6, the method further comprising a process of fixing a position where the position at which the capacitance varies is projected onto said display, as the coordinates.

**10.** A program causing a display device having a capacitive touch panel function to execute steps of:

displaying information on a display included in said display device;
measuring a variation in capacitance on said display;
determining whether or not a finger is in proximity to said display on the basis of the measured variation in capacitance;
fixing coordinates on said display according to a position at which the capacitance varies;
enlargingly displaying on said display a screen having been already displayed on said display in a manner centered on the fixed coordinates at a prescribed magnification; and
securing the coordinates until a determination is made that the finger is not in proximity to said display.

**11.** The program according to Claim 10, for further execution of steps of:

determining that the finger is in proximity to said display, if the measured variation in capacitance is a value not less than a preset first threshold and less than a preset second threshold; and
determining that the finger is in contact with said display, if the measured variation in capacitance is a value not less than the second threshold.

**12.** The program according to Claim 10, for further execution of a step of enlargingly displaying on said display a prescribed range centered on the fixed coordinates, the range having been in the screen displayed on said display.

**13.** The program according to Claim 10, for further execution of a step of
fixing a position where the position at which the capacitance varies is projected unto said display, as the coordinates.

Fig. 1

100 display device

120 sensor

110 display

130 controller

140 proximity determiner

150 coordinate fixer

160 enlarging processor

Fig. 2

Fig. 3

Fig. 4

Fig. 5

Fig. 6

# INTERNATIONAL SEARCH REPORT

International application No.

PCT/JP2010/063820

A. CLASSIFICATION OF SUBJECT MATTER
*G06F3/041*(2006.01)i, *G06F3/044*(2006.01)i, *G06F3/048*(2006.01)i

According to International Patent Classification (IPC) or to both national classification and IPC

B. FIELDS SEARCHED

Minimum documentation searched (classification system followed by classification symbols)
G06F3/041, G06F3/044, G06F3/048

Documentation searched other than minimum documentation to the extent that such documents are included in the fields searched
Jitsuyo Shinan Koho          1922–1996   Jitsuyo Shinan Toroku Koho   1996–2010
Kokai Jitsuyo Shinan Koho    1971–2010   Toroku Jitsuyo Shinan Koho   1994–2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 10-269022 A (Hitachi, Ltd.), 09 October 1998 (09.10.1998), paragraphs [0011] to [0037]; all drawings (Family: none) | 1-13 |
| Y | JP 2008-287323 A (Mitsubishi Electric Corp.), 27 November 2008 (27.11.2008), paragraph [0022] (Family: none) | 1-13 |
| Y | JP 2008-040966 A (Alpine Electronics, Inc.), 21 February 2008 (21.02.2008), paragraphs [0030] to [0034] (Family: none) | 1-13 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
08 November, 2010 (08.11.10)

Date of mailing of the international search report
16 November, 2010 (16.11.10)

Name and mailing address of the ISA/
Japanese Patent Office

Authorized officer

Facsimile No.

Telephone No.

Form PCT/ISA/210 (second sheet) (July 2009)

**EP 2 474 885 A1**

**REFERENCES CITED IN THE DESCRIPTION**

**Patent documents cited in the description**

- JP 2008009759 A

- JP 2009202513 A